# EUROPEAN PATENT SPECIFICATION

(11) **EP 0 861 600 B1**
(45) Date of publication and mention of the grant of the patent: **15.01.2003**
(21) Application number: 98300884.8
(22) Date of filing: 06.02.1998
(51) Int. Cl.: A23L 1/10, A23L 1/182, B02B 1/08

(54) **Grain and seed treatment**
Korn- und Samenbehandlung
Traitement des graines et semences

(30) Priority: 26.02.1997 GB 9703942
(43) Date of publication of application: 02.09.1998
(73) Proprietor: Micronizing Company (UK) Limited, Suffolk IP13 9PT (GB)
(72) Inventor: Newton, Roderick Guy, Aldeburgh, Suffolk, IP16 4NQ (GB)
(74) Representative: Rackham, Stephen Neil

(56) References cited:
- EP-B- 0 598 022
- FR-A- 2 193 551
- US-A- 4 555 409
- US-A- 5 132 133
- US-A- 5 176 931
- PATENT ABSTRACTS OF JAPAN vol. 014, no. 306 (C-0735), 3 July 1990 & JP 02 104249 A (OSAMU MATSUDA), 17 April 1990,
- DATABASE WPI Section Ch, Week 9543 Derwent Publications Ltd., London, GB; Class D13, AN 95-335077 XP002067009 & RU 2 030 882 C (GRAIN AND PRODUCTS RES INST)
- DATABASE WPI Section Ch, Week 9320 Derwent Publications Ltd., London, GB; Class D13, AN 93-166033 XP002067010 & SU 1 738 206 A (UNIV GRODNO)
- DATABASE WPI Section Ch, Week 9233 Derwent Publications Ltd., London, GB; Class D14, AN 92-275043 XP002067011 & SU 1 678 298 A (KAZA BALANCED FODDER IND RES INST)

## Description

The present invention relates to Micronizing, and in particular to an improved method and apparatus for Micronizing for the treatment of grain and seed including wheat, oats, barley, maize and soya.

Micronizing is a process carried out on grain or seed in which high intensity infra red radiation is applied to the grain or seed for a short period of time, and which causes the gelatinisation of starches in the grain or seed.

Grain and seed have a natural water content, in the case of cereals for consumer foods and animal feed of between around 10% and 14% by volume. By steeping the grain or seed in water, typically overnight, the water content in the grain or seed is raised by between 4% and 7%, namely to around 14% to 18% for cereals by steeping once, and to around 21% for maize by multiple steeping. The pre-soaked grain or seed is then passed through high intensity infra red radiation, which is generated by gas burners. Typically the grain or seed is in the infra red radiation for up to 1 minute, at a temperature of 90 to 95° C, after which the grain or seed can be flaked by passing through a milling operation. Alternatively, the grain or seed can be treated in the infra red radiation for a longer period of around 90 seconds causing expansion of the grain or seed to produce "torrefied" grain or seed.

By subjecting the grain or seed to the Micronizing process, starch in the grain or seed is gelatinised. Typically between 50% and a maximum of 75% of the starch in the grain or seed is gelatinised by the process. The precise amount of starch gelatinisation cannot be accurately controlled, and it is therefore hard to ensure an acceptably high percentage of gelatinisation. The process produces grain and seed which is more easily digestible, which is especially important for consumer food products and feed for young animals, with greater nutritional value, improved flavour and improved appearance compared to grain and seed not having undergone the process.

Ideally all of the starch in the grain or seed would be gelatinised, but this ideal has not been achieved using a Micronizing process.

Other processes such as extrusion have achieved a higher degree of starch gelatinisation. Extrusion can give around 90% starch gelatinisation. Nevertheless, extrusion is an expensive process to carry out on grain or seed compared to Micronizing.

US-A-5132133 discloses a process for producing a reduced calorie snack which includes both Micronizing and subsequent extrusion. Prior to Micronizing the whole grains are tempered by soaking in hot or ambient temperature water or subjected to steam.

In a first aspect, the invention consists in apparatus for Micronizing grain or seed comprising:
a container in which a liquid and the grain or seed are provided,
means for vibrating the container containing the liquid and grain or seed to cause the grain or seed to absorb between 25% and 30% by volume of the liquid, and
an infra red source for generating infra red radiation to which the wetted grain or seed is subjected to cause gelatinisation of at least 80% of the starch in the grain or seed.

By treating the grain or seed using this apparatus, a much higher percentage of starch in the grain or seed is gelatinised than is possible with conventional Micronizing systems, giving an improved grain or seed. Furthermore, the control and predictability of the process is greatly improved over prior art systems, include the control of the final water content.

By vibrating the liquid and the grain or seed, the water content of the grain or seed is increased to a level much greater than that achievable by traditional steeping or soaking within a similar time period. It is believed that this high water content results in the high percentage of starch gelatinisation which is achieved using the apparatus according to the present invention.

To achieve a water content of between 25% and 30% by volume, the grain or seed may need to be mixed with water and vibrated a second or further time. In this case it is preferred that the grain or seed is allowed to temper or rest for a period between subsequent treatments. Preferably the grain or seed is tempered for at least two hours, and preferably for less than four hours.

It is not possible to achieve the high levels of water content required for the present application by soaking in water alone within such a short time period. It is known to increase the amount of liquid absorbed by grain or seed by introducing chemicals to the liquid, but in this case the chemicals will also be absorbed by the grain or seed and can reduce the quality of the grain or seed.

It is preferred that the water and grain or seed are mixed and vibrated using a VIBRONET (Trade Mark) available from Graf GmbH & Co, and as described in European Patent Application EP-A-0,598,022.

Preferably, the percentage of starch in the grain or seed which is gelatinised is greater than 90%, more preferably is at least 93% and even more preferably is around 95%.

It is preferred that the apparatus includes a residual cooking vessel in which the Micronized grain or seed can be stored at a temperature above ambient temperature. This improves the control of enzyme reduction in the grain or seed, and is particularly important for oats in which the Micronizing process causes the oil cells in the oats to become exposed and oxidised. This also applies to other cereals as well as pulses and beans, including soya. It is believed that the residual heating prevents this oxidation. Preferably the grain or seed is held in the residual heating vessel for at least 15 minutes. The present invention makes residual heating possible, since the high initial water content gives a high final water content, and therefore residual heating, which reduces water content can be performed without leading to an unacceptably low final water content.

Where a residual heating vessel is provided, it is preferred that this includes a temperature detecting means and a feedback arrangement to maintain the temperature of the grain or seed at a desired temperature.

It is preferred that the apparatus includes a heating means to heat the grain or seed between water treatment and Micronizing. Preferably the heating means comprises a duct for extracting some of the heat from the infra red source, and using this to heat air which is blown over the grain or seed as these are introduced into the infra red radiation.

Advantageously the grain or seed is dropped through a column into which the heated air is blown. The column preferably includes a series of baffles which deflect the grain or seed in a zigzag path. This slows the passage of the grain or seed through the column and thereby gives a longer time during which the heated air can heat the grain or seed. Preferably at least some of the baffles are perforated so that the heated air can pass through them to heat the grain or seed. Advantageously the baffles are inclined at an angle of around 30°.

Preferably the heating of the grain or seed increases the temperature of the grain or seed to between about 30 and 40°C above ambient temperature. Due to the pre-heating of the grain or seed, the speed at which the grain or seed can be Micronized is significantly increased, giving about a 30 to 40% increase in capacity of the apparatus. It has not previously been possible to pre-heat the grain or seed as this removes part of the water content of the grain or seed, and therefore would result in a low percentage of starch gelatinisation. However, according to the present invention, the water content of the grain or seed is raised to a higher level than is conventionally the case, and therefore it is possible to pre-heat the grain to improve the capacity without any significant decrease in the starch gelatinisation.

In a second aspect, the invention consists in a method of Micronizing grain or seed comprising the steps of increasing the water content of the grain or seed to between 25% to 30% volume by mixing the grain or seed with water and vibrating the mixture, and subsequently subjecting the grain or seed to infra red radiation so that at least 80% of the starch in the grain or seed is gelatinised.

Preferably, at least 90% of the starch in the grain or seed is gelatinised. More preferably around 93% of the starch is gelatinised, and even more preferably around 95% is gelatinised.

Preferably, the grain or seed is pre-heated prior to being subjected to infra red radiation. This increases the capacity of the Micronizing process. Advantageously the grain or seed is pre-heated to a temperature of between 30 and 40°C.

It is beneficial to maintain the micronized grain or seed at an elevated temperature after they are subjected to the infra red radiation. The grain or seed is preferably held at this elevated temperature for around 15 minutes.

An example of the present invention will be described in accordance with the accompanying drawings, in which:
Figure 1 shows a schematic view of a Micronizing system according to the present invention;
Figure 2 shows a side view through part of a Micronizing apparatus according to the present invention; and,
Figure 3 shows a cross-sectional view through the grain or seed input shoot shown in the apparatus of Figure 2.

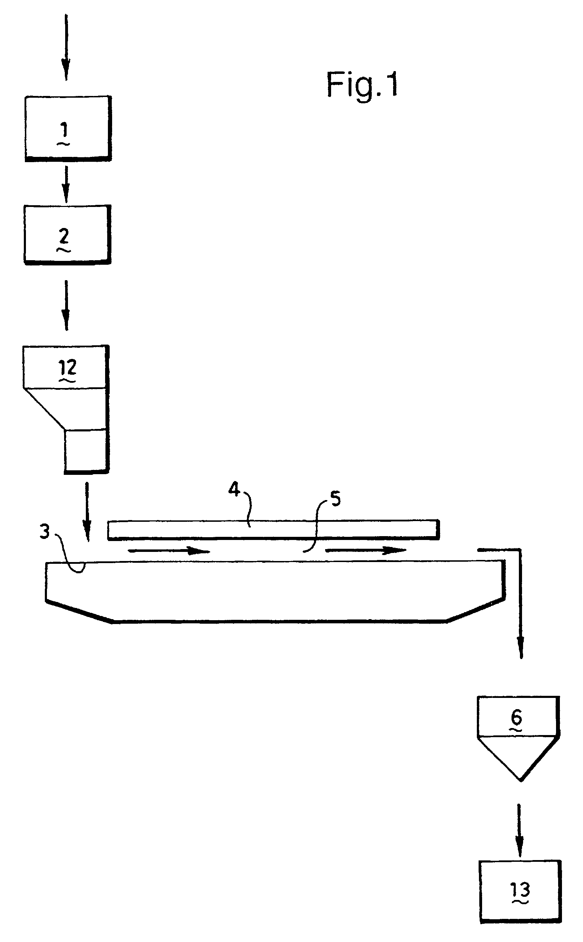

As shown in Figure 1, a vibratable container 1 is filled with a mixture of water and grain or seed to be processed. The vibratable container may be a VIBRONET (Trade Mark) available from Graf GmbH & Co, and as described in European Patent No. EP-B-0598022. The mixture of water with grain or seed is vibrated at a high frequency, typically of 72Hz, which causes a high percentage of water to be absorbed by the grain or seed. The grain or seed is then removed from the container 1, and is tempered in a tempering silo 2.

The absorbtion by the grain or seed of water causes the water content of the grain or seed to be increased, typically by around 8%. By repeating the treatment, additional water can be absorbed by the grain or seed, and therefore the grain or seed in the tempering silo 2 may be reintroduced into the vibrating container with additional water. This is repeated until the water content of the grain or seed is around 30% by volume. The grain or seed is then held in a feed hopper 12.

The treated grain or seed is then accurately deposited on the conveyor 3 via a feed hopper 12 of a conventional Micronizing apparatus to give an even spread on the conveyor. The grain or seed is conveyed through a region 5 of infra red radiation. The grain or seed remains in the infra red radiation for around 50 seconds for grain or seed which is subsequently to be flaked, or around 90 seconds for grain or seed which is to be torrefied. The infra red radiation may be generated by a series of gas burners 4 or electric element (not shown). As the grain or seed passes through the infra red radiation, the starch in the grain or seed is gelatinised. At least 80% of the starch in the grain or seed is gelatinised in this process, and typically between 90 and 95% of the starch is gelatinised.

After passing along the conveyor 3, the treated grain or seed is dropped into an outlet hopper 6. The outlet hopper 6 is in the form of a residual heating vessel in which the treated grain or seed is maintained at a high temperature for around 15 minutes. This residual heating helps reduce the enzymes in the finished product, and is particularly beneficial for the treatment of oats in which the oil cells are normally exposed during the Micronizing process and which are normally oxidised. To accurately maintain the temperature in the residual heating vessel, a thermostat or other temperature control system (not shown) is included. The heating vessel 6 is insulated to reduce condensation and thereby improve consistency. The treated grain or seed is then cooled in a cooling vessel 13.

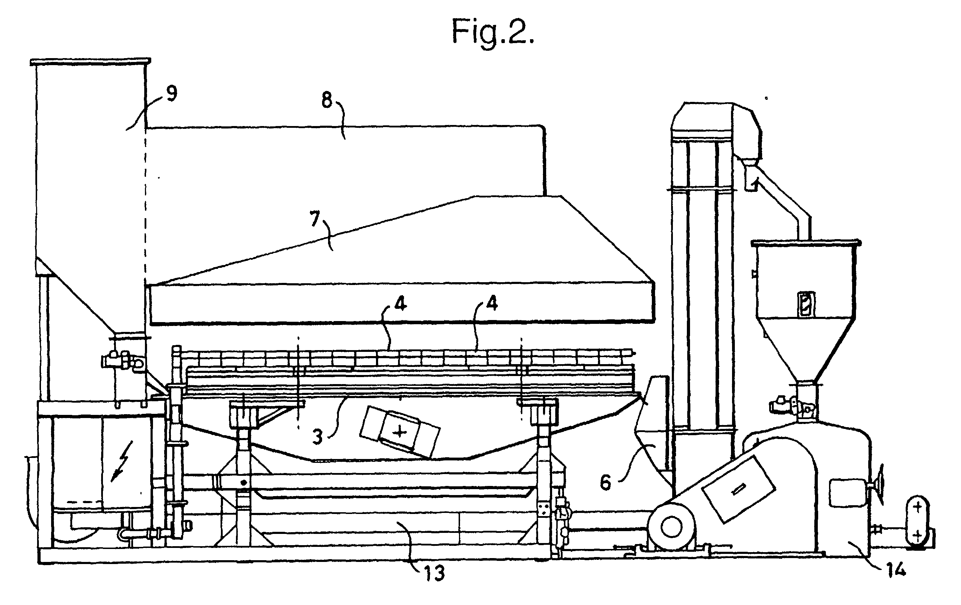

As shown best in Figure 2, a hood 7 is provided over the infra red source 4. The excess heat generated by the infra red source 4 rises into the hood 7 and into an outlet pipe 8. This heat is conveyed to an input shoot 9 where the heat is used to pre-heat the grain or seed as these are introduced to the infra red radiation. The vibrating container, tempering silo and hopper provided upstream of the input shoot 9 are not shown in Figure 2. The processed grain or seed may be flaked in a flaking mill 14, and is the cooled and exits to the left as shown in Figure 2.

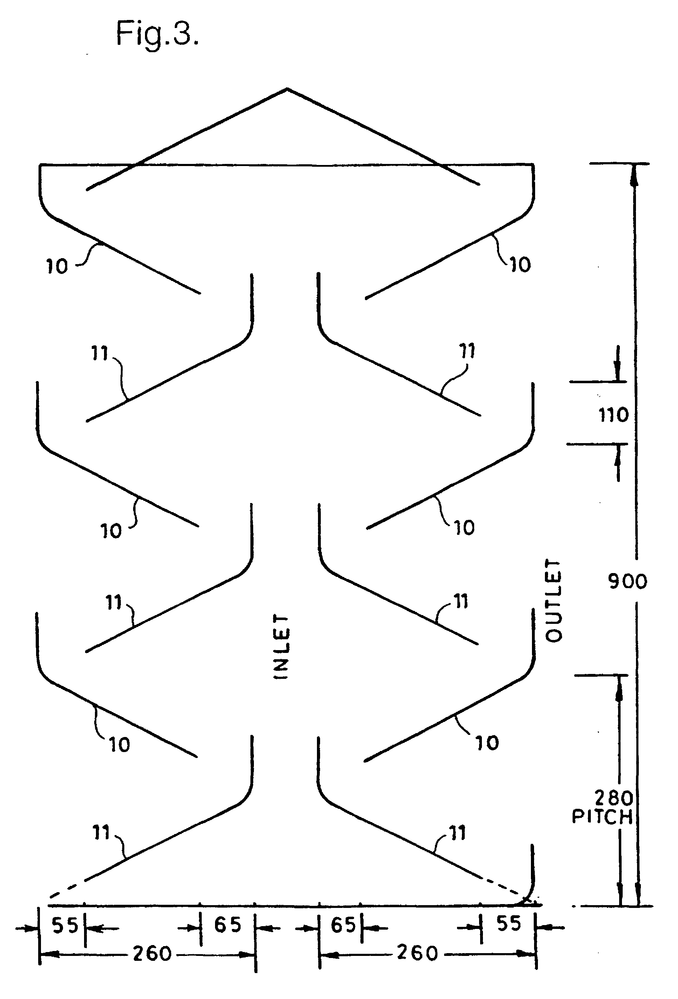

As shown in Figure 3, the grain or seed falls through the input shoot of Figure 2 and is deflected along baffles 10,11. The baffles 10, 11 are arranged so that the grain or seed drops by gravity slowly downwards in a zigzag path, with the heated air passing over the grain or seed as it falls. To assist in the heating of the grain or seed, the inlet baffles 11 are perforated, allowing the heated air to pass through the baffles 11 and over the grain or seed on falling along the baffles 11. The baffles 10 are solid. All of the baffles 10,11 are arranged at an angle of 30° which ensures that the grain or seed falls at the optimum rate to be heated. The grain or seed is more effectively heated when they are on the perforated baffles 11, and therefore the gap between the bottom of each perforated baffle 11 and each underlying baffle 10 is smaller than the corresponding gap between each said baffle 10 and underlying baffle 11, thereby ensuring that the grain or seed spends more time on the perforated baffles 11.

The additional heating of the grain or seed increases the temperature of the grain or seed to between 30 and 40°C, which permits an increase in the capacity of the system of between 30 and 40%. The pre-heating of the grain and seed reduces the water content in the grain and seed by between 3 and 4%, however as a much higher percentage of water is introduced into the grain or seed by the use of the vibrating container 1, this loss is acceptable, and still allows a high percentage of starch gelatinisation compared to conventional systems.

The use of a vibrating container for increasing the water content of the grain or seed is also beneficial for the treatment of cocoa beans. In this case, it is known to Micronize the beans to break the outer husk. By initially increasing the water content of the beans, it has been found that the Micronizing process more easily removes the husk.

## Claims

1. Apparatus for Micronizing grain or seed comprising:
a container (1) in which a liquid and the grain or seed are provided,
means for vibrating the container (1) containing the liquid and grain or seed to increase the water content of the grain or seed to between 25% and 30% by volume, and
an infra red source (4) for generating infra red radiation to which the wetted grain or seed is subjected to cause gelatinisation of at least 80% of the starch in the grain or seed.

2. Apparatus according to claim 1, in which the vibrating container (1) in which the water and grain or seed are mixed and vibrated is a VIBRONET (Trade Mark).

3. Apparatus according to claim 1 or claim 2, further comprising a residual cooking vessel (6) in which the grain or seed once subjected to infra red radiation can be stored at a temperature above ambient temperature.

4. Apparatus according to claim 3, in which the residual cooking vessel (6) includes a temperature detecting means and a feedback arrangement to maintain the temperature of the grain or seed at a desired temperature.

5. Apparatus according to any one of the preceding claims, further comprising a heating means to heat the grain or seed between water treatment and being subject infra red radiation.

6. Apparatus according to claim 5, in which the heating means comprises a duct for extracting some of the heat from the infra red source, and using this to heat air which is blown over the grain or seed as these are introduced into the infra red radiation.

7. Apparatus according to claim 6, further comprising a column through which the grain or seed are passed and into which the heated air is blown, the column including a series of baffles (10,11) which deflect the grain or seed in a zigzag path.

8. Apparatus according to claim 7, in which at least some of the baffles (10,11) are perforated so that the heated air can pass through them to heat the grain or seed.

9. Apparatus according to claim 7 or 8, in which the baffles (10,11) are inclined at an angle of around 30°.

10. A method of Micronizing grain or seed comprising the steps of increasing the water content of the grain or seed to between 25% to 30% by volume by mixing the grain or seed with water and vibrating the mixture, and subsequently subjecting the grain or seed to infra red radiation so that at least 80% of the starch in the grain or seed is gelatinised.

11. A method according to claim 10, in which the grain or seed is maintained at an elevated temperature for at least 15 minutes after being subjected to infra red radiation.

12. A method according to claim 10 or claim 11, in which the grain or seed is preheated to between about 30°C and 40°C above ambient temperature before it is subjected to infrared radiation.

13. A method according to any one of the preceding claims, in which the grain or seed is mixed with water and vibrated a second time prior to being subjected to infra red radiation.

14. A method according to claim 13, in which the grain or seed is allowed to temper or rest for a period between subsequent vibration treatments.

15. A method according to claim 14, in which the grain or seed is tempered for at least two hours, and less than four hours.

16. A method according to any one of the preceding claims, in which the percentage of starch in the grain or seed which is gelatinised is greater than 90%.

17. A method according to any one of the preceding claims, in which the percentage of starch in the grain or seed which is gelatinised is greater than 93%.

18. A method according to any one of the preceding claims, in which the percentage of starch in the grain or seed which is gelatinised is greater than 95%.

## Patentansprüche

1. Vorrichtung zum Mikronisieren von Korn oder Samen umfassend:
einen Behälter (1), in welchem eine Flüssigkeit und das Korn oder der Samen bereitgestellt werden,
ein Mittel zum Vibrieren des Behälters (1), der die Flüssigkeit und Korn oder Samen enthält, um den Wassergehalt des Korns oder des Samens auf zwischen 25 und 30 Vol.-% zu erhöhen, und
eine Infrarot-Quelle (4) zum Erzeugen von Infrarotstrahlung, der das angefeuchtete Kom oder der angefeuchtete Samen ausgesetzt wird, um ein Gelatinieren von mindestens 80% der Stärke im Korn oder Samen zu bewirken.

2. Vorrichtung nach Anspruch 1, in welcher der Vibrationsbehälter (1), in dem das Wasser und Korn oder Samen gemischt und in Vibration versetzt werden, ein VIBRONET (Marke) ist.

3. Vorrichtung nach Anspruch 1 oder Anspruch 2, die ferner einen Nachkochbehälter (6) umfasst, worin das Korn oder der Samen, die einmal der Infrarotstrahlung ausgesetzt wurden, bei einer Temperatur über Umgebungstemperatur gelagert werden können.

4. Vorrichtung nach Anspruch 3, in welcher der Nachkochbehälter (6) ein Temperaturmessmittel und eine Rückkopplungsanordnung umfasst, um die Temperatur des Korns oder des Samens bei einer gewünschten Temperatur zu halten.

5. Vorrichtung nach irgendeinem der vorhergehenden Ansprüche, die ferner ein Heizmittel zum Erwärmen des Korns oder des Samens zwischen der Wasserbehandlung und der Einwirkung der Infrarotstrahlung umfasst.

6. Vorrichtung nach Anspruch 5, in welcher das Heizmittel eine Leitung zum Gewinnen von einem Teil der Wärme von der Infrarot-Quelle umfasst und diese zum Erwärmen von Luft verwendet, die über das Korn oder den Samen geblasen wird, wenn sie in die Infrarotstrahlung gebracht werden.

7. Vorrichtung nach Anspruch 6, welche ferner eine Säule umfasst, durch die das Korn oder der Samen geleitet werden und in die die erwärmte Luft geblasen wird, wobei die Säule eine Reihe von Prallflächen (10, 11) beinhaltet, die das Korn oder den Samen zu einem Zick-Zack-Weg ablenken.

8. Vorrichtung nach Anspruch 7, in welcher zumindest einige der Prallflächen (10, 11) perforiert sind, so dass die erwärmte Luft durch sie passieren kann, um das Korn oder den Samen zu erwärmen.

9. Vorrichtung nach Anspruch 7 oder 8, in welcher die Prallflächen (10, 11) mit einem Winkel von etwa 30° geneigt sind.

10. Verfahren zum Mikronisieren von Korn oder Samen umfassend die Schritte des Erhöhens des Wassergehaltes des Korns oder des Samens auf zwischen 25 und 30 Vol.-% durch Mischen des Korns oder des Samens mit Wasser und Vibrieren der Mischung und der anschließenden Infrarotbestrahlung des Korns oder des Samens, so dass mindestens 80% der Stärke im Korn oder im Samen gelieren.

11. Verfahren nach Anspruch 10, in welchem das Korn oder der Samen nach der Infrarotbestrahlung für mindestens 15 Minuten bei einer erhöhten Temperatur gehalten werden.

12. Verfahren nach Anspruch 10 oder Anspruch 11, in welchem das Korn oder der Samen auf zwischen etwa 30°C und 40°C über Umgebungstemperatur vorgewärmt werden, bevor sie einer Infrarotstrahlung ausgesetzt werden.

13. Verfahren nach irgendeinem der vorhergehenden Ansprüche, in welchem das Korn oder der Samen ein zweites Mal mit Wasser gemischt und vibriert werden, bevor sie der Infrarotstrahlung ausgesetzt werden.

14. Verfahren nach Anspruch 13, in welchem man das Korn oder den Samen für einen Zeitraum zwischen aufeinander folgenden Vibrationsbehandlungen tempern oder ruhen lässt.

15. Verfahren nach Anspruch 14, in welchem das Korn oder der Samen für mindestens 2 Stunden und weniger als 4 Stunden getempert wird.

16. Verfahren nach irgendeinem der vorhergehenden Ansprüche, in welchem der Prozentgehalt an Stärke im Korn oder Samen, der geliert ist, größer als 90% ist.

17. Verfahren nach irgendeinem der vorhergehenden Ansprüche, in welchem der Prozentgehalt an Stärke im Korn oder Samen, der geliert ist, größer als 93% ist.

18. Verfahren nach irgendeinem der vorhergehenden Ansprüche, in welchem der Prozentgehalt an Stärke im Korn oder Samen, der geliert ist, größer als 95% ist.

## Revendications

1. Dispositif pour la micronisation de grain ou de semence comprenant:
. un conteneur (1) dans lequel un liquide et le grain ou la semence sont apportés,
. des moyens pour faire vibrer le conteneur (1) contenant le liquide et le grain ou la semence, pour augmenter la teneur en eau du grain ou de la semence jusqu'à une valeur située entre 25% et 30% en volume, et
. une source d'infra rouge (4) pour générer un rayonnement infra rouge auquel est soumis le grain ou la semence humidifié, pour provoquer la gélatinisation d'au moins 80% de l'amidon dans le grain ou la semence.

2. Dispositif selon la revendication 1, dans lequel le conteneur vibrant (1), dans lequel l'eau et le grain ou la semence sont mélangés et soumis à vibration, est un VIBRONET (marque déposée).

3. Dispositif selon la revendication 1 ou la revendication 2, comprenant en outre une cuve (6) de cuisson résiduelle, dans laquelle le grain ou la semence soumis qui a été soumis au rayonnement infra rouge peut être stocké à une température supérieure à la température ambiante.

4. Dispositif selon la revendication 3, dans lequel la cuve (6) de cuisson résiduelle comprend un moyen de détection de la température, et un agencement de rétroaction pour maintenir la température du grain ou de la semence à une température désirée.

5. Dispositif selon l'une quelconque des revendications précédentes, comprenant en outre un moyen de chauffage, pour chauffer le grain ou la semence entre le traitement à l'eau et le moment où il est soumis au rayonnement infra rouge.

6. Dispositif selon la revendication 5, dans lequel le moyen de chauffage comprend un conduit pour extraire une partie de la chaleur provenant de la source d'infra rouge, et son utilisation pour chauffer l'air qui est soufflé sur le grain ou la semence lorsqu'ils sont introduits dans le rayonnement infra rouge.

7. Dispositif selon la revendication 6, comprenant en outre une colonne à travers laquelle passe le grain ou la semence, et à l'intérieur de laquelle l'air chauffé est soufflé, la colonne comprenant une série de chicanes (10,11) qui font dévier le grain ou la semence en suivant un chemin en zigzag.

8. Dispositif selon la revendication 7, dans lequel au moins certaines des chicanes (10,11) sont perforées, de sorte que l'air chauffé peut passer à travers elles pour chauffer le grain ou la semence.

9. Dispositif selon la revendication 7 ou 8, dans lequel les chicanes (10,11) sont inclinées suivant un angle d'environ 30°.

10. Procédé de micronisation de grain ou de semence comprenant les étapes consistant à augmenter la teneur en eau du grain ou de la semence jusqu'à une valeur située entre 25% et 30% en volume, en mélangeant le grain ou la semence avec de l'eau, et en faisant vibrer le mélange, et à soumettre ensuite le grain ou la semence à un rayonnement infra rouge, de sorte qu'au moins 80% de l'amidon contenu dans le grain ou la semence soit gélatinisé.

11. Procédé selon la revendication 10, dans lequel le grain ou la semence est maintenu à une température élevée pendant au moins 15 minutes après avoir été soumis au rayonnement infra rouge.

12. Procédé selon la revendication 10 ou la revendication 11, dans lequel le grain ou la semence est préchauffé jusqu'à une température située entre environ 30°C et 40°C au-dessus de la température ambiante, avant qu'il ne soit soumis au rayonnement infra rouge.

13. Procédé selon l'une quelconque des revendications précédentes, dans lequel le grain ou la semence est mélangé à de l'eau, et soumis à vibration une seconde fois, avant d'être soumis au rayonnement infra rouge.

14. Procédé selon la revendication 13, dans lequel on permet au grain ou à la semence de tempérer ou de reposer pendant une certaine période, entre des traitements par vibration consécutifs.

15. Procédé selon la revendication 14, dans lequel le grain ou la semence est tempéré pendant au moins deux heures, et moins de quatre heures.

16. Procédé selon l'une quelconque des revendications précédentes, dans lequel le pourcentage de l'amidon qui est gélatinisé dans le grain ou la semence est supérieur à 90%.

17. Procédé selon l'une quelconque des revendications précédentes, dans lequel le pourcentage d'amidon qui est gélatinisé dans le grain ou la semence est supérieur à 93%.

18. Procédé selon l'une quelconque des revendications précédentes, dans lequel le pourcentage d'amidon qui est gélatinisé dans le grain ou la semence est supérieur à 95%.
